# EUROPÄISCHE PATENTSCHRIFT

(11) **EP 0 847 832 B1**
(45) Veröffentlichungstag und Bekanntmachung des Hinweises auf die Patenterteilung: **06.02.2002**
(21) Anmeldenummer: 97119233.1
(22) Anmeldetag: 04.11.1997
(51) Int. Cl.: B23Q 3/155

(54) **Universal- Fräs- und Bohrmaschine**
Universal milling and boring machine
Fraiseuse-aléseuse universelle

(30) Priorität: 10.12.1996 DE 19651277
(43) Veröffentlichungstag der Anmeldung: 17.06.1998
(73) Patentinhaber: DECKEL MAHO GmbH, D-87459 Pfronten (DE)
(72) Erfinder: Lechleiter, Karl, 87466 Oy-Mittelberg (DE)
(74) Vertreter: Beetz & Partner Patentanwälte

(56) Entgegenhaltungen:
- FR-A- 2 596 106
- US-A- 4 837 919

## Beschreibung

Die Erfindung betrifft eine Universal- Fräs- und Bohrmaschine, die eine in mindestens einer Koordinatenachse motorisch bewegbare Bearbeitungseinheit mit einer Arbeitsspindel, einen stationären oder in mindestens einer Koordinatenachse motorisch bewegbaren Werkstücktisch, ein Werkzeugmagazin und mindestens einen zwischen der Arbeitsspindel und dem Werkzeugmagazin bewegbaren Werkzeuggreifer umfaßt, der an einem verschwenkbaren Tragarm angeordnet ist.

Moderne Werkzeugmaschinen zur Fräs- und Bohrbearbeitung sind häufig mit einem automatischen Werkzeugwechselsystem ausgestattet, das eine selbsttätige Durchführung mehrerer Bearbeitungsvorgänge ohne manuelle Eingriffe und eine Reduzierung der werkzeugbedingten Nebenzeiten ermöglicht. Derartige Werkzeugwechselsysteme enthalten in der Regel einen oder mehrere verschwenkbare Werkzeuggreifer zum Transport der Werkzeuge zwischen einer Arbeitsspindel und einem Werkzeugmagazin. Aus der EP 0 307 691 B1 ist beispielsweise eine programmgesteuerte Fräs-und Bohrmaschine mit einem Werkzeugwechsler bekannt, der einen horizontal verschwenkbaren Tragarm mit einer daran beweglich gelagerten Greiferzange aufweist. Die Schwenkbewegung des Tragarms zur Überführung der Werkzeuge zwischen dem Werkzeugmagazin und der Arbeitsspindel erfolgt bei dieser bekannten Maschine durch einen Hydraulikzylinder, dessen Kolbenstange an einem drehfest mit dem Tragarm verbundenen radialen Ansatz angelenkt ist. Ein derartiger Hydraulikantrieb erfordert allerdings technisch aufwendige und kostspielige Versorgungs- und Steueraggregate.

Aufgabe der Erfindung ist es, eine gattungsgemäße Universal- Fräs- und Bohrmaschine mit einer kostengünstigen Werkzeugwechseleinrichtung zu schaffen, die mit einem geringeren apparativen und steuerungstechnischen Aufwand kurze Werkzeugwechselzeiten ermöglicht.

Diese Aufgabe wird erfindungsgemäß dadurch gelöst, daß der Tragarm über einen elektromotorisch betätigten Kurbelschwingentrieb verschwenkbar ist.

Durch den Kurbelschwingentrieb können bei der erfindungsgemäßen Universal-Fräs- und Bohrmaschine sämtliche für den Werkzeugwechsel erforderliche Hin- und Herbewegungen des Tragarms mit dem daran angeordneten Werkzeuggreifer durch einen einfachen und kostengünstigen Antriebsmotor ohne aufwendige Steuer- und Versorgungseinrichtungen realisiert werden. Als Antriebsmotor kann beispielsweise ein einfach aufgebauter Elektromotor verwendet werden, der u.a. als Scheibenwischermotor in Kraftfahrzeugen eingesetzt wird. Die rotierende Antriebsbewegung des Elektromotors wird über den Kurbelschwingentrieb in eine Hin- und Herbewegung des Tragarms zwischen der Arbeitsspindel und dem Werkzeugmagazin umgewandelt. Ein Verschwenken des Tragarms von einer Ruhestellung zum Werkzeugmagazin für die Übernahme eines neuen Werkzeugs und ein anschließendes Zurückschwenken zur Arbeitsspindel für die Entnahme eines alten und die Einwechslung des neuen Werkzeugs kann dabei durch Drehung des Elektromotors in einer Richtung verwirklicht werden. Durch Drehrichtungsumkehr des Elektromotors kann dann der Tragarm zur Ablage des alten Werkzeugs im Werkzeugmagazin in dessen Richtung verschwenkt und durch Weiterdrehung in derselben Richtung wieder in die Ruheposition verbracht werden. Die Auswahl und Entnahme eines weiteren Werkzeugs und dessen Transport in die Ruhestellung kann dann zur Verkürzung der Wechselzeiten auch während der Bearbeitung erfolgen. Der Kurbelschwingentrieb ist derart ausgelegt, daß sich der am Tragarm angeordnete Werkzeuggreifer in den beiden Umkehrstellungen in den Übernahmepositionen an der Arbeitsspindel bzw. an dem Werkzeugmagazin befindet. Dadurch wird ohne aufwendige Steuerungen ein für den Wechselvorgang optimaler ruckfreier Bewegungsablauf mit einem langsamen An- und Abfahren des Werkzeuggreifer an der Arbeitsspindel bzw. dem Werkzeugmagazin und einer dazwischen beschleunigten Schwenkbewegung des Tragarms zur Erzielung schneller Werkzeugwechselzeiten ermöglicht.

Vorteilhafte Ausgestaltungen und zweckmäßige Fortbildungen der Erfindung sind in den Unteransprüchen angegeben. So umfaßt der Kurbelschwingentrieb in einer konstruktiv zweckmäßigen Ausführung ein motorisch angetriebenes Kurbelrad und eine mit diesem über eine Koppelstange gelenkig verbundene Schwinge, die mit dem horizontal verschwenkbaren Tragarm drehfest verbunden ist.

Der Werkzeuggreifer ist vorzugsweise als Doppelgreifer ausgebildet. Dies ermöglicht kürzere Werkzeugwechselzeiten gegenüber Einfachgreifern, da gebrauchtes und neues Werkzeug mit einem Arbeitsgang des Tragarmes ausgetauscht werden können. Allerdings ist auch mit Einfachgreifern ein Werkzeugwechsel möglich.

In einer weiteren zweckmäßigen Ausführung der Erfindung kann die Schwenkbewegung des Werkzeuggreifers über einen Riementrieb aus der Schwenkbewegung des Tragarms abgeleitet werden. Der Riementrieb ist dabei derart in den Tragarm eingebaut, daß der Tragarm beim Verschwenken eine Relativbewegung gegenüber einer koaxial zur Schwenkachse des Tragarms angeordneten antriebsseitigen Riemenscheibe des Riementriebs ausführt und daß sich die mit einer Antriebswelle des Werkzeuggreifers gekoppelte abtriebsseitige Riemenscheibe beim Verschwenken des Tragarms auf einer Kreisbahn um die Schwenkachse des Tragarms bewegt. Dadurch kann die über den Kurbelschwingenantrieb erzeugte Schwenkbewegung des Tragarms ohne zusätzlichen Antriebsmotor in eine dazu gegensinnige Schwenkbewegung des Werkzeuggreifers umgewandelt werden. Die Ableitung der Werkzeuggreiferbewegung kann anstelle des Riementriebs aber auch durch andere geeignete Getriebe, wie z.B. Kettentriebe oder Zahnradgetriebe mit entsprechenden Zwischenrädern, erfolgen.

Zur Erzeugung der Relativbewegung zwischen der antriebsseitigen Riemenscheibe und dem Tragarm bei dessen Verschwenkung kann die Riemenscheibe entweder während der Verschwenkbewegung des Tragarms blockiert oder durch einen gesonderten Antrieb verdreht werden. Die beiden Antriebe können dabei derart überlagert und auf die jeweils erforderlichen Bedürfnisse angepaßt werden, daß der Werkzeuggreifer in den Endstellungen des Tragarms die erforderliche Lage zur direkten Übernahme bzw. Übergabe der Werkzeuge am Werkzeugmagazin bzw. an der Arbeitsspindel aufweist. Der gesonderte Antrieb der Riemenscheibe kann gleichzeitig dazu verwendet werden, um im Falle eines Doppelgreifers den Platztausch zwischen dem besetzten und dem freien Greifer in den beiden Endstellungen des Tragarms zu bewerkstelligen.

In einer besonders zweckmäßigen und platzsparenden Konstruktion ist die antriebsseitige Riemenscheibe des Riementriebs auf einer von einem Motor angetriebenen Welle befestigt, die in einer hohlen Antriebswelle des Tragarms verdrehbar gelagert ist. Der Antrieb der Welle zur Erreichung einer gewünschten Schwenkbewegung des Werkzeuggreifers kann bei einer besonders einfachen Ausführung durch ein Kurvengetriebe aus einer Antriebsscheibe mit einer inneren Kurvenbahn und zwei in die Kurvenbahn eingreifenden Antriebsbolzen erfolgen, die diametral gegenüberliegend an der unteren Stirnseite einer vom Motor angetriebenen Welle angeordnet sind. Auch hier kann als Antriebsmotor ein einfacher Scheibenwischermotor verwendet werden. Zur Verringerung der Reibung zwischen den Antriebsbolzen und der Antriebsscheibe sind die Antriebsbolzen zweckmäßigerweise als drehgelagerte Rollenbolzen ausgebildet.

Ein einfacher und schneller Antrieb des Werkzeugmagazins zeichnet sich durch eine motorisch antreibbare Treibscheibe mit zwei diametral gegenüberliegenden Treibzapfen aus, die zum Eingriff in Radialschlitze am Werkzeugmagazin angeordnet sind. Dieser Antrieb ermöglicht durch eine Drehung der Treibscheibe um 180° eine Weiterdrehung des Werkzeugmagazins um einen Schritt. Gegenüber herkömmlichen Malteserkreuzantrieben, bei denen zum Weitertakten des Magazins um einem Platz jeweils eine Drehung des Antriebsrades um 360° erforderlich war, kann damit eine deutliche Verkürzung der Werkzeugwechselzeiten erreicht werden. Die Treibscheibe kann auch hier durch einen einfach aufgebauten Elektromotor ohne aufwendige Steuerung angetrieben werden.

Weitere Besonderheiten und Vorzüge der Erfindung ergeben sich aus der folgenden Beschreibung eines bevorzugten Ausführungsbeispiels anhand der Zeichnung. Es zeigen:
- Fig.1: eine Draufsicht einer erfindungsgemäßen Universal- Fräs-und Bohrmaschine;
- Fig. 2: eine vergrößerte Draufsicht eines Werkzeugwechslers;
- Fig. 3: eine zum Teil geschnittene Seitenansicht des Werkzeugwechslers von Fig. 2;
- Fig. 4A,B: eine Antriebsscheibe eines Stellantriebs zum Verschwenken eines Doppelgreifers in unterschiedlichen Stellungen;
- Fig. 5: eine Schnittansicht eines Tellermagazins;
- Fig. 6: eine Draufsicht des Tellermagazins von Fig. 5; und
- Fig. 7A,B,C: eine schematische Darstellung des Werkzeugwechslers in unter schiedlichen Stellungen.

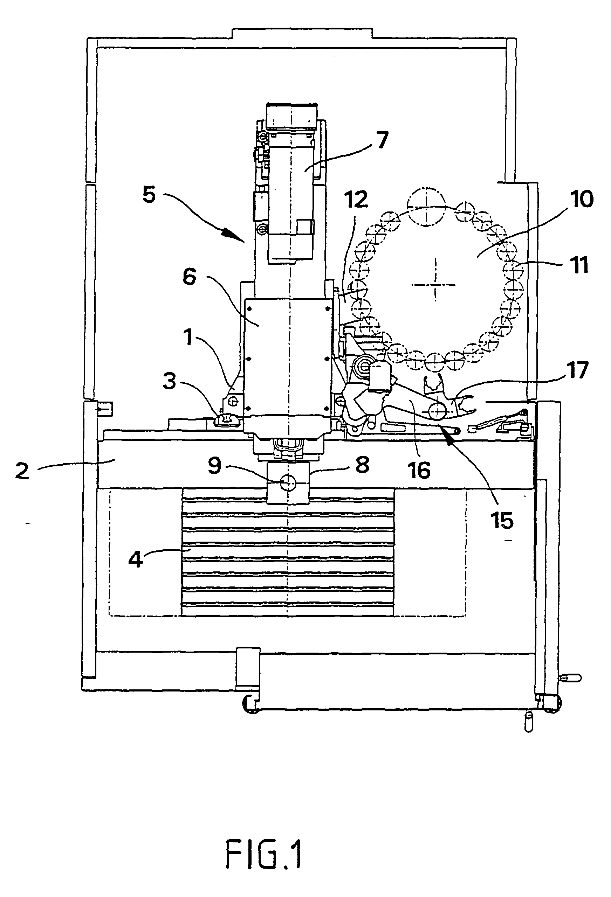

Die in Fig. 1 in Draufsicht dargestellte Universal- Fräs- und Bohrmaschine enthält einen Maschinenständer 1, an dessen Vorderseite eine Konsole 2 über Senkrechtführungen 3 in der Y-Achse vertikal verfahrbar angeordnet ist. Die Konsole 2 trägt einen in der X-Achse horizontal verschiebbaren Werkstücktisch 4. Auf der Oberseite des Maschinenständers 1 ist eine Bearbeitungseinheit 5 in der Z-Achse horizontal verschiebbar geführt. Die Antriebsmotoren und Übertragungselemente für die Verfahrbewegungen der vorstehend genannten Bauteile sind in Fig. 1 nicht dargestellt. Die Bearbeitungseinheit 5 umfaßt einen Spindelstock 6 mit einer darin gelagerten und von einem Motor 7 angetriebenen horizontalen Arbeitsspindel und einen an der vorderen Stirnseite des Spindelstocks 6 angeordneten Fräskopf 8 mit einer darin gelagerten vertikalen Arbeitsspindel 9. Der Fräskopf 8 ist aus der in Fig.1 gezeigten Arbeitsstellung in eine Ruhestellung nach oben verschwenkbar und ermöglicht so eine schnelle Umrüstung zur Bearbeitung mit der horizontalen - oder vertikalen Arbeitsspindel.

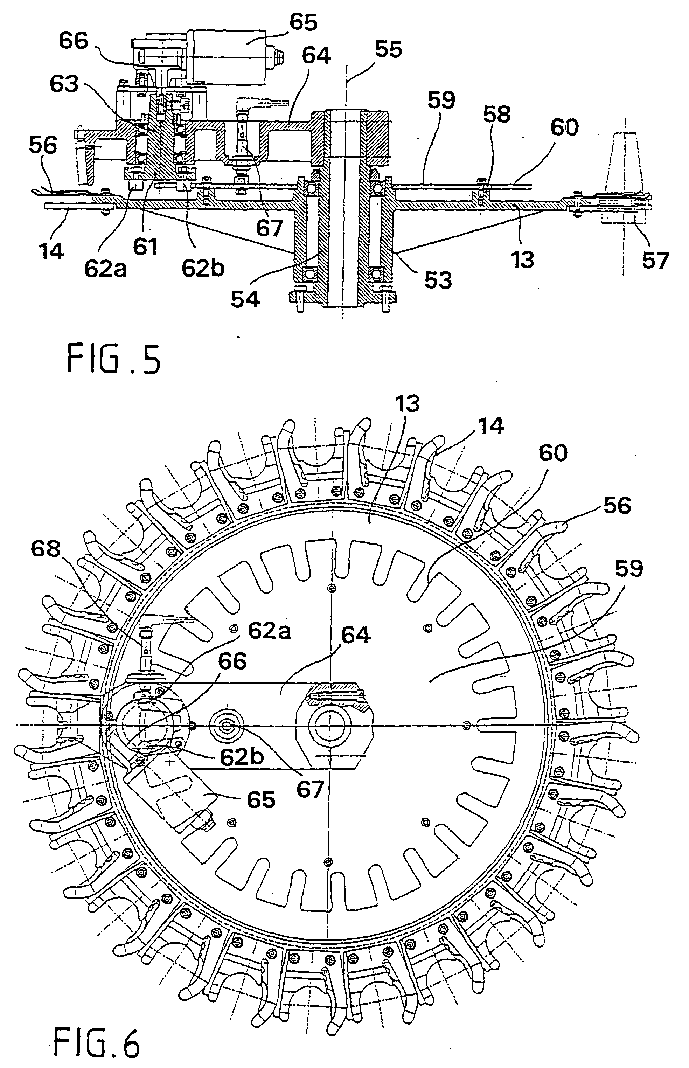

Seitlich neben dem Spindelstock 6 ist ein motorisch verdrehbares Tellermagazin 10 für mehrere Bearbeitungswerkzeuge 11 angeordnet, das von einer am Maschinenständer 1 seitlich befestigten Stütze 12 gehalten wird. Das Tellermagazin 10 weist - wie besonders in Fig. 6 gezeigt - eine am oberen Ende der Stütze 12 drehbar angeordnete Tellerscheibe 13 auf, an deren Außenumfang regelmäßig beabstandete zangenförmige Werkzeugaufnahmen 14 befestigt sind. Vor dem Tellermagazin 10 ist seitlich am Maschinenständer 1 ein automatischer Werkzeugwechsler 15 mit einem verschwenkbaren Tragarm 16 und einem Doppelgreifer 17 zum Transport der Bearbeitungswerkzeuge 11 zwischen dem Tellermagazin 10 und der vertikalen Arbeitsspindel 9 montiert.

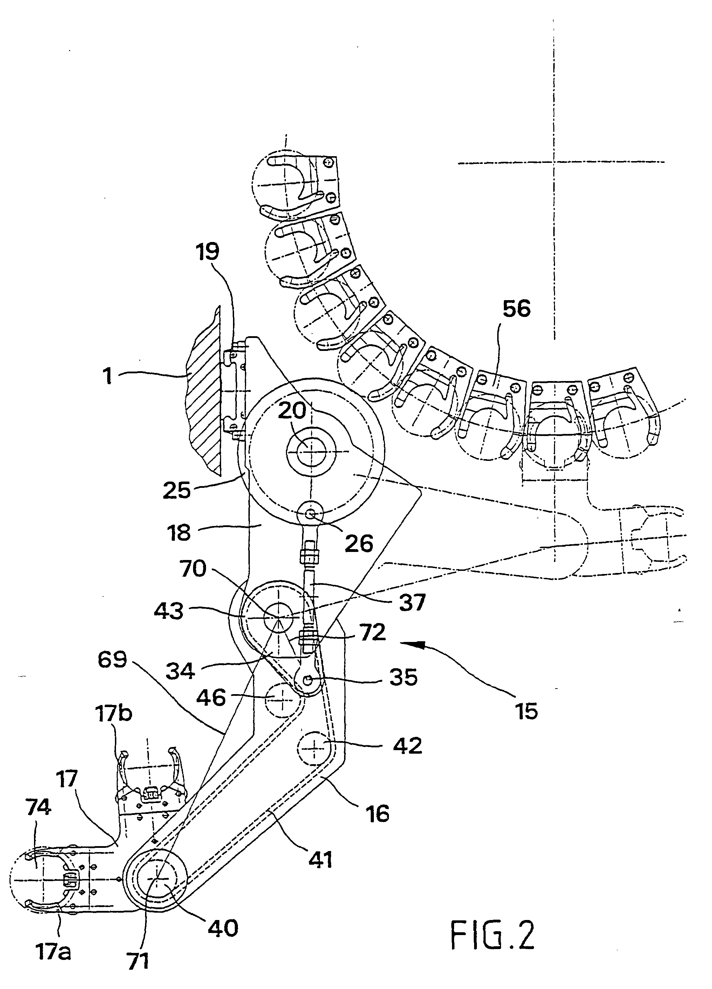

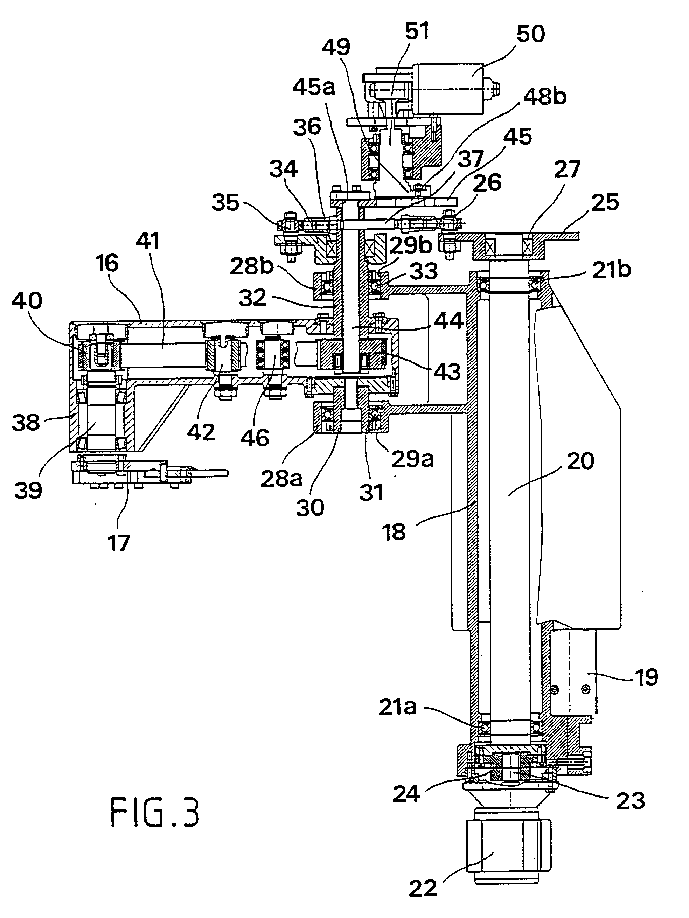

Wie besonders in den Fig. 2 und 3 gezeigt, enthält der Werkzeugwechsler 15 eine Tragsäule 18, die über eine Linearführung 19 vertikal verschiebbar an einer Seitenwand des Maschinenständers 1 angeordnet ist. In der Tragsäule 18 ist eine Welle 20 über Lager 21a und 21b vertikal gelagert. Am unteren Ende der Tragsäule 18 ist ein Antriebsmotor 22 angeflanscht, dessen Antriebswelle 23 über ein Verbindungselement 24 drehfest mit dem in Fig.3 unteren Ende der Welle 20 verbunden ist. Auf dem von der Tragsäule 18 nach oben vorstehenden freien Ende der Welle 20 ist ein Kurbelrad 25 mit einem zur Drehachse der Welle 20 radial versetzten ersten Kurbelzapfen 26 mittels eines Spannelements 27 verdrehgesichert befestigt.

Seitlich an der Tragsäule 18 sind zwei zueinander parallel auskragende Lagerstützen 28a und 28b angeformt, in denen zwei miteinander fluchtende Lagerbohrungen 29a bzw. 29b zur Lagerung des um eine Vertikalachse horizontal verschwenkbaren Tragarms 16 angeordnet sind. In der in Fig. 3 unteren Lagerbohrung 29a ist ein an der Unterseite des Tragarms 16 befestigter Lagerzapfen 30 über ein Lager 31 gelagert, während in der oberen Lagerbohrung 29b eine an der Oberseite des Tragarms 16 angeflanschte hohle Antriebslwelle 32 über ein Lager 33 gelagert ist. An einem von der oberen Lagerstütze 28b nach oben vorstehenden Teil der hohlen Antriebswelle 32 ist eine Schwinge 34 mit einem zur Drehachse der Antriebswelle 32 radial versetzten zweiten Kurbelzapfen 35 mittels eines Spannelements 36 verdrehgesichert befestigt. An dem zweiten Kurbelzapfen 35 ist das eine Ende einer in der Länge verstellbaren Koppelstange 37 angelenkt, deren anderes Ende gelenkig mit dem ersten Kurbelzapfen 26 am Kurbelrad 25 verbunden ist.

Das vom Antriebsmotor 22 über die Welle 20 drehangetriebene Kurbelrad 25 und die mit diesem über die Koppelstange 37 gelenkig verbundene Schwinge 34 bilden einen Kurbelschwingentrieb zum Verschwenken des Tragarms 16.

An dem vorderen Ende des Tragarms 16 ist der Doppelgreifer 17 mit zwei um etwa 90° zueinander versetzten Greiferzangen 17a und 17b verschwenkbar angeordnet, von denen die eine zur Entnahme und die andere zur Abgabe der Werkzeuge an der vertikalen Arbeitsspindel 9 ausgebildet ist. Der abgewinkelte horizontale Tragarm 16 ist als Hohlkörper ausgebildet und hat an seinem vorderen Ende einen in Fig. 3 gezeigten hohlzylindrischen Lageransatz 38, in dem der Doppelgreifer 17 über einen vertikalen Wellenzapfen 39 verschwenkbar gelagert ist. Auf dem oberen Ende des Wellenzapfens 39 ist eine Riemenscheibe 40 für einen Endlosriemen 41 drehfest fixiert. Der Endlosriemen 41 ist außerdem um eine im Innenraum des Tragarms 16 angeordnete Umlenkrolle 42 und eine Riemenscheibe 43 geführt, die auf einem in den Innenraum des Tragarms 16 ragenden Ende einer durch die hohle Antriebswelle 32 verlaufenden Welle 44 verdrehfest befestigt ist. Über eine mittels Exzenter verstellbare Spannrolle 46 im Innenraum des Tragarms 16 ist der Endlosriemen 41 vorspannbar.

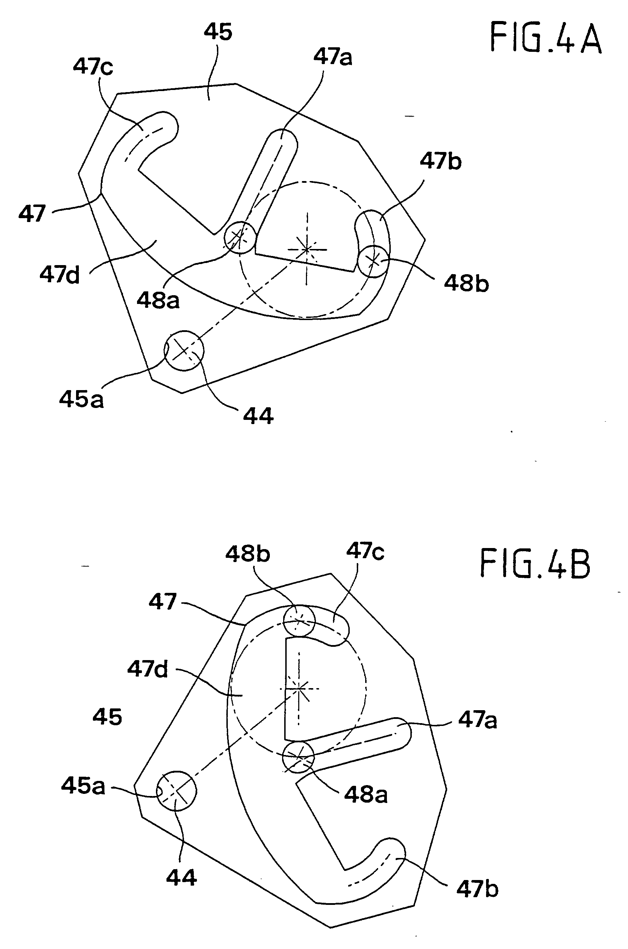

An dem nach oben über die hohle Antriebswelle 32 vorstehenden Ende der Welle 44 ist eine in Figuren 4A und 4B in Draufsicht vergrößert dargestellte Antriebsscheibe 45 mit einer seitlichen Bohrung 45a verdrehgesichert fixiert. In der Antriebsscheibe 45 ist eine innere Kurvenbahn 47 mit einem mittleren geraden Führungsschlitz 47a und zwei äußeren gebogenen Führungsschlitzen 47b und 47c ausgebildet, die über eine gekrümmte Führungsbahn 47d verbunden sind. In die Kurvenbahn 47 greifen zwei Antriebsbolzen 48a und 48b ein, die diametral gegenüberliegend an der Unterseite eines in Fig. 3 gezeigten Wellenansatzes 49 einer von einem Motor 50 drehangetriebenen vertikalen Welle 51 verdrehbar befestigt sind. Die beiden Antriebsbolzen 48a bzw. 48b sind zur Verringerung der Reibung als drehgelagerte Rollenbolzen ausgebildet. In Fig. 3 ist allerdings nur einer beiden Rollenbolzen gezeigt. Der Motor 50 ist an einem Tragansatz 52 der Tragsäule 18 montiert, in dem die Welle 51 vertikal gelagert ist. Die Kurvenbahn 47 in der Antriebsscheibe 45 ist derart ausgebildet, daß der in Fig. 4A linke Rollenbolzen 48a bei Drehung der Welle 51 im Uhrzeigersinn in den geraden Führungsschlitz 47a eintritt, während der rechte Rollenbolzen 48b aus dem gebogenen Führungsschlitz 47c austritt, sich im weiteren Verlauf an der gekrümmten Führungsbahn 47d abwälzt und gemäß Fig. 4B in den gebogenen Führungsschlitz 47c eintritt. Dadurch wird eine ruckfreie Verschwenkung des Doppelgreifers 17 über den Endlosriemen 41 bei Drehung der Welle 51 durch den Motor 50 ermöglicht.

Bei dem in Fig. 5 und 6 im einzelnen dargestellten Tellermagazin 10 ist die Tellerscheibe 13 über eine hohlzylindrische Lagerbuchse 53 auf einem an der Stütze 12 befestigbaren Lagerzapfen 54 um eine Vertikalachse 55 drehbar gelagert. An dem Außenumfang der Tellerscheibe 13 sind die regelmäßig beabstandeten zangenförmigen Aufnahmen 14 mit oberen Federlaschen 56 befestigt, durch die der Ringbund einer in Fig. 5 gestrichelt dargestellten Werkzeugaufnahme 57 mit nach oben ragendem Aufnahmekegel zur Fixierung der Werkzeuge im Tellermagazin 10 an die zangenförmigen Aufnahmen 14 angedrückt wird. Auf der Oberseite der Tellerscheibe 13 sind Distanzstücke 58 angeformt, auf denen eine zur Vertikalachse 55 konzentrische Ringscheibe 59 unter einem vorgegebenen Abstand zur Tellerscheibe 13 befestigt ist. An ihrem Außenumfang weist die Ringscheibe 59 eine der Anzahl der Aufnahmen 14 entprechende Anzahl an gleichwinklig beabstandeten Radialschlitzen 60 auf, die gegenüber den Aufnahmen 14 um eine halbe Winkelteilung versetzt sind. Der Antrieb der Tellerscheibe 13 erfolgt durch eine motorisch verdrehbare Treibscheibe 61 mit zwei diametral gegenüberliegenden Treibzapfen 62a und 62b an deren unteren Stirnseite, die zum Eingriff in die Radialschlitze 60 angeordnet sind und durch Drehung der Treibscheibe 61 um 180° das Tellermagazin 10 um einen Platz weitertransportieren. Auch hier sind die beiden Treibzapfen 62a und 62b zur Verringerung der Reibung um eine Mittelachse drehbar ausgebildet. Die Treibscheibe 61 ist mit ihrer Antriebswelle 63 in einer Horizontalstütze 64 gelagert, die seitlich auskragend auf dem oberen Ende des Lagerzapfens 54 drehfest fixiert ist. Die Antriebswelle 63 der Treibscheibe 61 wird von einem auf der Horizontalstütze 64 montierten Stellmotor 65 über ein Schneckengetriebe 66 angetrieben. Zur Überwachung der Schaltstellungen des Tellermagazins 10 sind ein horizontaler und ein vertikaler berührungsloser Schalter 67 und 68 vorgesehen.

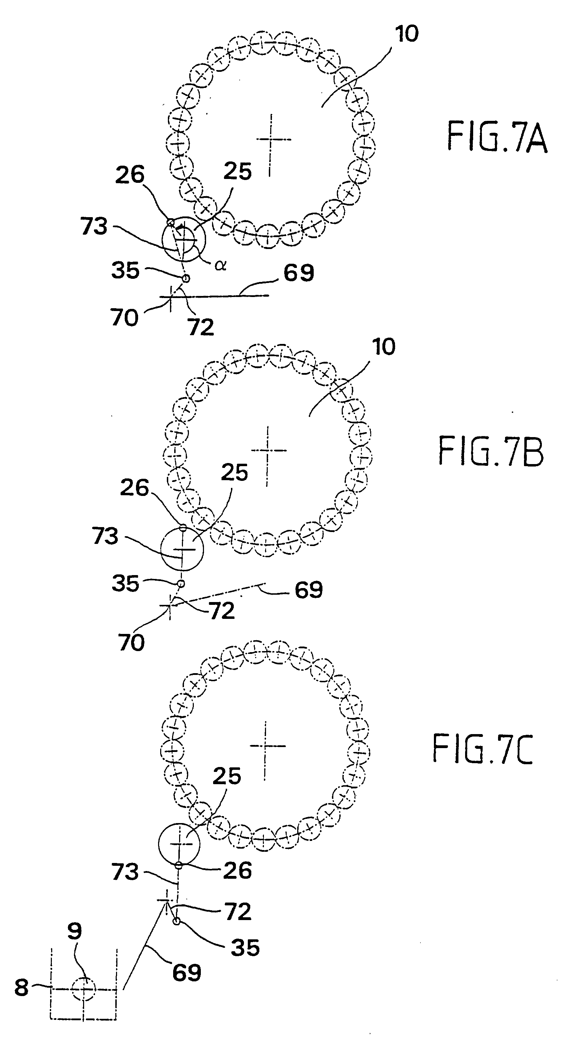

Die Funktionsabläufe eines vollständigen Werkzeugwechsels werden im folgenden anhand der Fig. 2 sowie der Fig. 7 erläutert, die unterschiedliche Stellungen des Werkzeugwechslers zeigt. Zur Vereinfachung sind in Fig. 7 der Tragarm 16 nur anhand der in Fig. 2 angegebenen Verbindungslinie 69 zwischen seinem Drehpunkt 70 und dem Drehpunkt 71 des Doppelgreifers 17 sowie die Schwinge 34 nur durch die Verbindungslinie 72 zwischen dem Drehpunkt 70 und dem Kurbelzapfen 35 dargestellt. Auch die Koppelstange 37 zwischen dem Kurbelzapfen 35 und dem Kurbelzapfen 26 am Kurbelrad 25 ist nur durch eine Verbindungslinie 73 gezeigt. Der Doppelgreifer 17 wurde in Fig.7 zur Vereinfachung weggelassen.

Für einen Werkzeugwechselvorgang sei vorausgesetzt, daß der Werkzeugwechsler 12 die in Fig. 1 dargestellte Ruheposition einnimmt, in der beide Greiferzangen 17a und 17b leer und nicht in Eingriff mit dem Tellermagazin 10 sind. In dieser auch in Fig. 7A schematisch gezeigten Stellung ist das Kurbelrad 25 mit dem Kurbelzapfen 26 gegenüber der in Fig. 2 dargestellten Lage um einen Winkel α von etwa 222° entgegen dem Uhrzeigersinn verdreht. Ein für den nächsten Bearbeitungsschritt benötigtes Werkzeug wurde durch entsprechende Drehung des Tellermagazins 10 durch den Stellmotor 65 in eine vorbestimmte Übergabeposition transportiert.

Zur Entnahme des gewünschten Werkzeugs aus dem Tellermagazin 10 wird das Kurbelrad 25 durch den Antriebsmotor 22 im Uhrzeigersinn bis in die in Fig. 7B schematisch dargestellte Position gedreht, in welcher der Kurbelzapfen 26 der in Fig. 1 und Fig. 7C dargestellten Lage diametral gegenüberliegt. Dadurch wird der Tragarm 16 entgegen dem Uhrzeigersinn zum Tellermagazin 10 hin verschwenkt und nimmt die in Fig. 2 gestrichelt dargestellte Stellung ein. Über den Riementrieb 40,41,43 wird die Schwenkbewegung des Tragarms 16 in eine dazu gegenläufige Schwenkbewegung des Werkzeuggreifers 17 umgewandelt, wobei die Greiferzange 17 a in die in Fig. 2 gestrichelt dargestellte Übernahmeposition gelangt , das zu entnehmende Werkzeug 67 umschließt und dabei durch Anheben der Federlaschen 56 über entsprechende Vorsprünge an der Greiferzange 17a gleichzeitig die Klemmung des Werkzeugs innerhalb des Tellermagazins 10 löst.

Anschließend wird das Kurbelrad 25 durch Weiterdrehung des Antriebsmotors 22 um 180° im Uhrzeigersinn in die in Fig. 7C schematisch und in Fig.2 durchgezogen dargestellte Position gedreht. Über die Koppelstange 37 und die Schwinge 34 wird dabei der Tragarm 16 in die in Fig. 2 durchgezogen dargestellte Position verschwenkt. Die Schwenkbewegung des Tragarms 16 im Uhrzeigersinn wird über den Endlosriemen 41 und die Riemenscheiben 40 und 43 in eine gegenläufige Schwenkbewegung des Doppelgreifers 17 entgegen dem Uhrzeigersinn umgesetzt, wobei sich das Werkzeug unter dem Tragarm 16 hindurchbewegt. Dabei wird der durch die Schwenkbewegung des Tragarms 16 über den Riementrieb 40,41,43 bewirkten gegenläufigen Schwenkbewegung des Doppelgreifers 17 eine durch den Motor 50 über das Kurvengetriebe 45, 48, 51 erzeugte Schwenkbewegung überlagert, wobei die beiden Bewegungen derart aufeinander abgestimmt sind, daß sich der noch leere Greifer 17b nach Beendigung der Verschwenkbewegung des Tragarms 16 in einer Stellung befindet, in der er das in der Arbeitsspindel 8 angeordnete Werkzeug umgreift.

Im Anschluß daran wird die Klemmung des auszuwechselnden Werkzeugs innerhalb der Arbeitsspindel 8 gelöst und die gesamte Tragsäule 18 entlang der Führung 19 durch einen nicht dargestellten Antrieb vertikal nach unten verfahren. Dabei wird das auszuwechselnde Werkzeug aus der Arbeitsspindel 8 herausgezogen. Dann wird der Doppelgreifer 17 vom Motor 50 über das Kurvengetriebe 45, 48, 51 und den Riementrieb 40, 41, 43 derart verschwenkt, daß sich das einzuwechselnde Werkzeug 74 im Werkzeuggreifer 17a unterhalb der Arbeitsspindel 8 befindet, wie dies in Fig. 2 gezeigt ist.

Die Tragsäule 18 wird daraufhin zum Einsatz des neuen Werkzeugs 74 in die Arbeitsspindel 8 wieder hochgefahren und die Werkzeugklemmung im Inneren der Arbeisspindel 18 aktiviert. Durch anschließende Drehung des Kurbelrads 25 durch den Motor 22 um 180° entgegen dem Uhrzeigersinn und entsprechende Drehung des Motors 50 kann der Werkzeugreifer 17b mit dem alten Werkzeug zur Übergabeposition am Tellermagazin 10 verschwenkt und dort an einem freien Platz abgelegt werden, der bereits vorher durch entsprechende Drehung des Werkzeugmagazins zur Übergabeposition hin bewegt wurde.

Durch Weiterdrehung des Kurbelrads 25 um etwa 42° entgegen dem Uhrzeigersinn wird der Tragarm 16 mit dem Doppelgreifer 17 wieder vom Tellermagazin 10 weg in die in Fig. 7A schematisch gezeigte Ruhestellung verschwenkt.

Die Auswahl eines neuen Werkzeuges und dessen Transport in die Ruhe- bzw. Bereitschaftsstellung zwischen Werkzeugmagazin und Arbeitsspindel kann zur Verkürzung der Werkzeugwechselzeiten dann während der Berarbeitung erfolgen.

Die Erfindung ist nicht auf das dargestellte Ausführungsbeispiel beschränkt.
So kann anstelle des Tellermagazins auch ein Kettenmagazin oder dgl. zum Einsatz gelangen. Auch die Form und Anordnung des Tragarms kann je nach Bauform der Werkzeugmaschine und Anordnung des Werkzeugmagazins in anderer geeigneter Weise gewählt werden.

## Patentansprüche

1. Universal- Fräs- und Bohrmaschine mit
- einer in mindestens einer Koordinatenachse motorisch bewegbaren Bearbeitungseinheit (5) mit einer Arbeitsspindel (9),
- einem stationären oder in mindestens einer Koordinatenachse motorisch bewegbaren Werkstücktisch (4),
- einem Werkzeugmagazin (10) und
- mindestens einem zwischen der Arbeitsspindel (9) und dem Werkzeugmagazin (10) bewegbaren Werkzeuggreifer (17), der an einem verschwenkbaren Tragarm (16) angeordnet ist,
**dadurch gekennzeichnet,**
**daß** der Tragarm (16) über einen elektromotorisch betätigten Kurbelschwingentrieb (25, 34, 37) verschwenkbar ist.

2. Universal- Fräs- und Bohrmaschine nach Anspruch 1, **dadurch gekennzeichnet, daß** der Kurbelschwingentrieb (25, 34, 37) ein drehangetriebenes Kurbelrad (25) und eine mit diesem über eine Koppelstange (37) gelenkig verbundene Schwinge (34) umfaßt, die mit dem Tragarm (16) drehfest verbunden ist.

3. Universal- Fräs- und Bohrmaschine nach Anspruch 1 oder 2, **dadurch gekennzeichnet, daß** der Werkzeuggreifer (17) ein am Tragarm (16) verschwenkbar angeordneter Doppelgreifer ist.

4. Universal- Fräs- und Bohrmaschine nach einem der Ansprüche 1 bis 4, **dadurch gekennzeichnet, daß** der Werkzeuggreifer (17) über einen Riementrieb (40,41,43) verschwenkbar ist.

5. Universal- Fräs- und Bohrmaschine nach Anspruch 4, **dadurch gekennzeichnet, daß** der Riementrieb (40, 41, 43) eine auf einem Wellenzapfen (39) des Werkzeuggreifers (17) verdrehfest fixierte abtriebsseitige Riemenscheibe (40) und eine mit dieser über einen Riemen (41) gekoppelte antriebsseitige Riemenscheibe (43) umfaßt, die koaxial zur Schwenkachse des Tragarms (16) angeordnet und für eine Relativbewegung zwischen ihr und dem Tragarm (16) ausgebildet ist.

6. Universal- Fräs- und Bohrmaschine nach Anspruch 5, **dadurch gekennzeichnet, daß** die antriebsseitige Riemenscheibe (43) auf einer Welle (44) befestigt ist, die in einer hohlen Antriebswelle (32) des Tragarms (16) verdrehbar gelagert ist.

7. Universal- Fräs- und Bohrmaschine nach Anspruch 4 oder 5, **dadurch gekennzeichnet, daß** die antriebsseitige Riemenscheibe (43) von einem Motor (50) über ein Kurvengetriebe (45, 48, 51) verdrehbar ist.

8. Universal- Fräs- und Bohrmaschine nach Anspruch 7, **dadurch gekennzeichnet,**
**daß** das Kurvengetriebe (45, 48, 51) eine auf der Welle (44) verdrehfest gesicherte Antriebsscheibe (45) mit einer inneren Kurvenbahn (47) aufweist, in die zwei an der Stirnseite einer vom Motor (50) drehangetriebenen Welle (51) diametral gegenüberliegend angeordnete Antriebsbolzen (48a, 48b) eingreifen.

9. Universal-Fräs- und Bohrmaschine nach Anspruch 8, **dadurch gekennzeichnet, daß** die Kurvenbahn (47) einen mittleren geraden Führungsschlitz (47a) und zwei äußere gebogene Führungsschlitze (47b, 47c) umfaßt, die über eine gekrümmte Führungsbahn (47d) verbunden sind.

10. Universal- Fräs- und Bohrmaschine nach Anspruch 8 oder 9, **dadurch gekennzeichnet, daß** die Antriebsbolzen (48a, 48b) als drehgelagerte Rollenbolzen ausgebildet sind.

11. Universal- Fräs- und Bohrmaschine nach einem der Ansprüche 1 bis 10, **dadurch gekennzeichnet, daß** der Tragarm (16) an einer vertikal verschiebbaren Tragsäule (18) angeordnet ist.

12. Universal- Fräs- und Bohrmaschine nach einem der vorhergehenden Ansprüche, **dadurch gekennzeichnet, daß** der Tragarm (16) als Knickarm ausgebildet ist.

13. Universal- Fräs- und Bohrmaschine nach einem der vorhergehenden Ansprüche, **dadurch gekennzeichnet, daß** das Werkzeugmagazin (10) von einem Stellmotor (65) über eine Treibscheibe (61) mit zwei diametral gegenüberliegenden Treibzapfen (62a, 62b) angetrieben wird, die bei einer Drehbewegung um eine gemeinsame Mittelachse das Werkzeugmagazin (10) durch Eingriff in Radialschlitze (60) periodisch weitertransportieren.

14. Universal- Fräs- und Bohrmaschine nach Anspruch 13, **dadurch gekennzeichnet, daß** das Werkzeugmagazin (10) eine Tellerscheibe (13) mit regelmäßig beabstandeten zangenförmigen Werkzeugaufnahmen (14) an ihrem Außenumfang und eine auf der Tellerscheibe (13) beabstandet fixierte Ringscheibe (59) umfaßt, an dessen Außenumfang die Radialschlitze (60) mit einer der Anzahl der Werkzeugaufnahmen (14) entsprechenden Teilung gleichwinklig beabstandet angeordnet sind.

15. Universal- Fräs-und Bohrmaschine nach Anspruch 13 oder 14, **dadurch gekennzeichnet, daß** die Treibzapfen (62a, 62b) um eine Mittelachse drehbar angeordnet sind.

16. Universal- Fräs- und Bohrmaschine nach einem der Ansprüche 13 bis 15, **dadurch gekennzeichnet, daß** die Treibscheibe (61) in einer Horizontalstütze (64) drehgelagert ist, die seitlich auskragend auf einem Lagerzapfen (54) fixiert ist, auf dem das Werkzeugmagazin (10) gelagert ist.

## Claims

1. Universal milling and drilling machine with
- a machining unit (5) with a work spindle (9) able to be moved by means of a motor in at least one coordinate axis.
- a work table (4) which is stationary or able to be moved by means of a motor in at least one coordinate axis.
- a tool magazine (10) and
- at least one tool gripper (17) arranged on a swivelling lug (16), able to be moved between the work spindle (9) and the tool magazine (10)
**characterised by** the fact that the lug (16) is able to be swivelled by a crank-and-rocker arm mechanism (25, 34, 37) actuated by an electric motor.

2. Universal milling and drilling machine according to Claim 1, **characterised by** the fact that the crank-and-rocker arm mechanism (25, 34, 37) comprises a rotationally driven crank wheel (25) and a crank (34) which is linked in articulated fashion via a coupling rod (37) which is, in turn, rigidly linked to the carrying lug (16).

3. Universal milling and drilling machine according to Claim 1 or 2, **characterised by** the fact that the tool gripper (17) is a double gripper and is arranged so as to be able to be swivelled on the carrying lug (16).

4. Universal milling and drilling machine according to one of the Claims 1 to 4, **characterised by** the fact that the tool gripper (17) can be swivelled via a belt drive (40, 41, 43).

5. Universal milling and drilling machine according to Claim 4, **characterised by** the fact that the belt drive (40, 41, 43) comprises a belt pulley (40) on the drive side, rigidly fixed on the shaft journal (39) of the tool gripper (17) and a belt pulley (43) coupled with the belt pulley (40) by means of a belt (41), the belt pulley (43) being arranged coaxially with the swivelling axle of the carrier lug (16) and shaped for a relative motion between itself and the carrying lug (16).

6. Universal milling and drilling machine according to Claim 5, **characterised by** the fact that the belt pulley (43) on the drive side, is fastened on a shaft (44) which is lodged in a hollow drive shaft (32) of the carrying lug (16).

7. Universal milling and drilling machine according to Claim 4 or 5, **characterised by** the fact that the belt pulley (43) on the drive side is able to be rotated by a motor (50) via a cam drive (45, 48, 51).

8. Universal milling and drilling machine according to Claim 7, **characterised by** the fact that the cam drive (45, 48, 51) has a drive pulley (45) which is rigidly fixed on the shaft (44) with an inner curved path (47), which is engaged by two drive axles (48a, 48b) arranged in diametrically opposite positions on the front of a shaft (51) which is able to be rotated by a motor (50).

9. Universal milling and drilling machine according to Claim 8, **characterised by** the fact that the curved path (47) comprises a straight central guiding slot (47a) and two outer bent guiding slots (47b, 47c), which are linked by a curved path (47d).

10. Universal milling and drilling machine according to Claim 8 or 9, **characterised by** the fact that the drive axles (48a, 48b) are shaped as roller axles which are able to rotate.

11. Universal milling and drilling machine according to one of the Claims from 1 to 10, **characterised by** the fact that the carrying lug (16) is arranged on a vertically movable carrying pillar (18).

12. Universal milling and drilling machine according to one of the preceding Claims, **characterised by** the fact that the carrying lug (16) is shaped as a buckling lug.

13. Universal milling and drilling machine according to one of the preceding Claims, **characterised by** the fact that the tool magazine (10) is actuated by a servomotor (65) via drive pulley (61) with two drive shafts (62a, 62b) lying diametrically opposite one another which, during rotation about a common central axle, periodically move forward the tool magazine (10), by means of engagement in the radial slot (60)

14. Universal milling and drilling machine according to Claim 13, **characterised by** the fact that the tool magazine (10) comprises a disc wheel (13) with evenly spaced, tong-shaped tool-holding fixtures (14) on its outer circumference and a fixed ring wheel (59) fixed on and at a distance from, the disc wheel (13), on the outer circumference of which the radial slot (60) is arranged at even angular intervals, in accordance with the number of tool-holding fixtures (14).

15. Universal milling and drilling machine according to Claim 13 or 14, **characterised by** the fact that the drive shafts (62a, 62b) are arranged so as to be able to rotate about a central axle.

16. Universal milling and drilling machine according to one of the Claims 13 to 15, **characterised by** the fact that the driving wheel (61) is lodged so as to be able to rotate in a horizontal support (64), which is fixed in a sideways projecting position on an axle journal (54), on which the tool magazine (10) is accommodated.

## Revendications

1. Fraiseuse-aléseuse universelle constituée :
- d'une unité d'usinage (5) munie d'un arbre moteur (9), permettant un entraînement moteur sur au moins un axe des coordonnées,
- d'une table d'outils (4) fixe ou à entraînement moteur sur au moins un axe des coordonnées,
- d'un magasin à outils (10) et
- d'au moins une pince pour saisir les outils (17) mobile entre l'arbre moteur (9) et le magasin à outils (10), disposée sur un bras support (16) oscillant,
**caractérisée en ce que** le bras support (16) oscille par le biais d'une transmission à bielle oscillante électromotorisée (25, 34, 37).

2. Fraiseuse-aléseuse universelle conformément à la revendication 1, **caractérisée en ce que** la transmission à bielle oscillante électromotorisée (25, 34, 37) comprend un pignon de vilebrequin (25) entraîné circulairement et une bielle oscillante (34) reliée de manière articulée à ce pignon par le biais d'une tige de couplage (37), la bielle étant raccordée au bras support (16) de manière à résister à la torsion.

3. Fraiseuse-aléseuse universelle conformément à la revendication 1 ou 2, **caractérisée en ce que** la pince saisissant les outils (17) est une double pince disposée de manière à osciller sur le bras support (16).

4. Fraiseuse-aléseuse universelle conformément aux revendications 1 à 4, **caractérisée en ce que** la pince saisissant les outils (17) oscille par le biais d'un entraînement à courroie (40, 41, 43).

5. Fraiseuse-aléseuse universelle conformément à la revendication 4, **caractérisée en ce que** l'entraînement à courroie (40, 41, 43) comprend une poulie de courroie (40), située côté sortie, fixée, de manière à résister à la torsion, sur un pivot (39) de la pince saisissant les outils (17) et une poulie de courroie (43), située côté entraînement, couplée avec l'autre poulie par le biais d'une courroie (41), la poulie étant disposée coaxialement par rapport à l'axe d'oscillation du bras support (16) et conçue pour un mouvement relatif entre elle et le bras support (16).

6. Fraiseuse-aléseuse universelle conformément à la revendication 5, **caractérisée en ce que** la poulie de courroie (43) située du côté entraînement est fixée sur un arbre (44) qui est monté de manière à tourner dans un arbre d'entraînement (32) du bras support (16).

7. Fraiseuse-aléseuse universelle conformément à la revendication 4 ou 5, **caractérisée en ce que** la poulie de courroie (43) d'un moteur (50), située du côté entraînement, est susceptible de tourner par le biais d'un mécanisme à came (45, 48, 51).

8. Fraiseuse-aléseuse universelle conformément à la revendication 7, **caractérisée en ce que** le mécanisme à came (45, 48, 51) présente une poulie d'entraînement (45) bloquée pour résister à la torsion sur un arbre (44), dotée d'une voie de cames interne (47), dans laquelle s'insèrent deux axes d'entraînement (48a, 48b), diamétralement opposés sur la face frontale d'un arbre (51) entraîné circulairement par un moteur (50).

9. Fraiseuse-aléseuse universelle conformément à la revendication 8, **caractérisée en ce que** la voie de cames (47) comprend une fente de guidage droite médiane (47a) et deux fentes de guidage courbes externes (47b, 47c) qui sont reliées par une voie de guidage incurvée (47d).

10. Fraiseuse-aléseuse universelle conformément à la revendication 8 ou 9, **caractérisée en ce que** les axes d'entraînement (48a, 48b) sont conçus sous forme d'axes cylindriques pivotant.

11. Fraiseuse-aléseuse universelle conformément à l'une des revendications 1 à 10, **caractérisée en ce que** le bras support (16) est disposé sur une colonne support (18) déplacable verticalement.

12. Fraiseuse-aléseuse universelle conformément à l'une des revendications précédentes, **caractérisée en ce que** le bras support (16) est conçu sous la forme d'un coude.

13. Fraiseuse-aléseuse universelle conformément à l'une des revendications précédentes, **caractérisée en ce que** le magasin à outils (10) est entraîné par un moteur de positionnement (65) par le biais d'une poulie motrice (61) dotée de deux tourillons moteurs (62a, 62b) diamétralement opposés qui transportent périodiquement, lors d'un mouvement circulaire autour d'un axe médian commun, le magasin à outils (10) en s'introduisant dans une fente radiale (60).

14. Fraiseuse-aléseuse universelle conformément à la revendication 13, **caractérisée en ce que** le magasin à outils (10) comprend une poulie plate (13) munie de logements pour outils (14) en forme de pinces, situés à distances régulières sur son contour externe, et d'une poulie annulaire (59) fixée à distance de la poulie plate (13), dont le contour externe accueille des fentes radiales (60) dotées d'une division correspondant au nombre de logements pour outils (14) et disposées à une certaine distance en position équiangle.

15. Fraiseuse-aléseuse universelle conformément à la revendication 13 ou 14, **caractérisée en ce que** les tourillons moteurs (62a, 62b) sont disposés mobiles autour d'un axe médian.

16. Fraiseuse-aléseuse universelle conformément à l'une des revendications 13 à 15, **caractérisée en ce que** la poulie motrice (61) est montée mobile sur un support horizontal (64), fixé en saillie latéralement sur une fusée d'essieu (54) sur laquelle est situé le magasin à outils (10).
